# EUROPEAN PATENT APPLICATION

(11) **EP 4 745 965 A1**
(43) Date of publication of application: **20.05.2026**
(21) Application number: 24839688.9
(22) Date of filing: 05.07.2024
(51) Int. Cl.: G11B 5/73, C03C 3/085, C03C 3/087, C03C 3/091, C03C 3/093, G11B 5/84

(54) **GLASS PLATE FOR INFORMATION RECORDING MEDIUM**

(30) Priority: 10.07.2023 JP 2023113103
(71) Applicant: NIPPON SHEET GLASS COMPANY, LIMITED, Tokyo 108-6321 (JP)
(72) Inventor: KURACHI, Junji, Tokyo 108-6321 (JP); MIYABE, Daisuke, Tokyo 108-6321 (JP); TSUNODA, Shingo, Tokyo 108-6321 (JP)
(74) Representative: Cabinet Beau de Loménie
(86) International application number: PCT/JP2024/024486
(87) International publication number: WO 2025/013796

(57) **Abstract**

A glass sheet suitable for an information recording medium is provided. The glass sheet according to the present invention for an information recording medium has a Young's modulus of 94 GPa or more, a specific gravity of 2.8 or less, and a glass transition temperature of 700°C or higher.

## Description

### TECHNICAL FIELD

The present invention relates to a glass sheet for an information recording medium, specifically, a glass sheet suitable for an information recording medium configured to be included in an information recording device typified by a hard disk drive (HDD).

### BACKGROUND ART

Larger recording capacity and shorter access time have been required of information recording devices such as magnetic disks typified by HDDs. One way to achieve this is through faster rotation of an information recording medium. However, a substrate of an information recording medium deflects under rotation. The deflection may increase resonance of the information recording medium with increasing rotational speed and may end up with a collision between the information recording medium and a magnetic head to cause a read error or a magnetic head crash. Because of this, it is impossible to decrease the distance, called the flying height, between a magnetic head and an information recording medium having a conventional substrate to a certain distance or less. This prevents an increase in recording capacity. Substrates desirably have a high Young's modulus to reduce deflection and resonance of the substrates. Glass is known to basically have a higher Young's modulus than that of aluminum alloys forming aluminum substrates, depending on its composition. Patent Literature 1, for example, discloses a glass sheet developed for use as substrates of information recording media.

Moreover, in an information recording medium manufacturing process, a high-temperature treatment is sometimes required in a step of forming a recording layer. Hence, substrates of information recording media are required to be heat-resistant.

### CITATION LIST

### Patent Literature

Patent Literature 1: WO 2012/131824 A1

### SUMMARY OF INVENTION

### Technical Problem

The Young's modulus of the glass sheet disclosed in Patent Literature 1 is approximately 80 GPa or less, and there is still room for improvement. Therefore, the present invention aims to provide a glass sheet suitable for an information recording medium.

### Solution to Problem

The present invention provides a glass sheet for an information recording medium, the glass sheet having a Young's modulus of 94 GPa or more, a specific gravity of 2.8 or less, and a glass transition temperature of 700°C or higher.

### Advantageous Effects of Invention

According to the present invention, a glass sheet suitable for an information recording medium is provided.

### BRIEF DESCRIPTION OF DRAWING

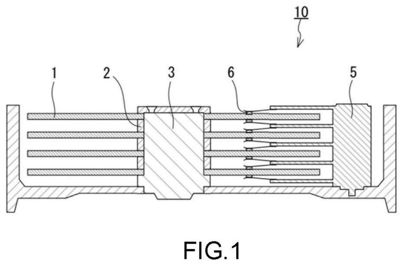

FIG. 1 is a partial cross-sectional view showing an example of an HDD.

### DESCRIPTION OF EMBODIMENTS

Hereinafter, the present invention will be described in detail. The following description is not intended to limit the present invention to specific embodiments. Herein, "substantially free of" a component means that the content of the component is less than 0.1 mol%, preferably less than 0.08 mol%, and more preferably less than 0.05 mol%. Moreover, hereinafter, a temperature at which the logarithm (logη) of a liquid viscosity η (unit: dPa·s) of a melt of a glass composition is n may be referred to as Tn. Furthermore, hereinafter, the upper and lower limits of contents and properties can be employed in any combination.

The present invention provides a glass sheet according to the following aspects for an information recording medium.

A glass sheet according to a first aspect has a Young's modulus of 94 GPa or more, a specific gravity of 2.8 or less, and a glass transition temperature of 700°C or higher.

In a second aspect, the glass sheet according to the first aspect includes a glass composition including 15 to 30 mol% MgO.

In a third aspect, the glass sheet according to the first or second aspect has a glass transition temperature of 800°C or higher.

In a fourth aspect, the glass sheet according to any one of the first to third aspects has a Young's modulus of 100 GPa or more.

In a fifth aspect, the glass sheet according to any one of the first to fourth aspects has a value ΔT of 20°C or higher, the value ΔT being determined by subtracting a devitrification temperature from a liquidus temperature (T2).

In a sixth aspect, the glass sheet according to any one of the first to fifth aspects has a specific elastic modulus of 36 MNm/kg or more.

In a seventh aspect, the glass sheet according to any one of the first to sixth aspects has a specific gravity of 2.65 or less.

In an eighth aspect, the glass sheet according to any one of the first to seventh aspects has a thickness of 1 mm or less.

In a ninth aspect, in the glass sheet according to any one of the first to eighth aspects, a difference between SnO₂ concentrations in a first principal surface and a second principal surface is 0.5 mass% or less.

### [Hard Disk (HDD)]

The glass sheet of the present embodiment has a high Young's modulus and a low specific gravity, and is suitable for an information recording device, in particular, an information recording medium included in an HDD. FIG. 1 is a partial cross-sectional view showing an example of an HDD. An HDD 10 includes a shroud forming a sealed case and a plurality of platters 1 disposed in the shroud. FIG. 1 shows only a portion of the shroud. The number of platters 1 each being an information recording medium is four in the figure, but is not limited to four. Each platter 1 includes the glass sheet and magnetic recording layers each arranged on a different principal surface of the glass sheet. Each platter 1 is a ring-shaped disk having a circular hole at the center. Ring-shaped spacers 2 are each disposed between adjacent platters 1 to secure a given interval. The four platters 1 are rotatably supported by a spindle motor 3 in the hole. A head assembly 5 is further disposed in the shroud. The head assembly 5 includes a main body disposed lateral to outer portions of the four platters 1 and swing arms extending from the main body along the principal surfaces of the platters 1. Each swing arm has, at its end, a magnetic head 6 called a slider. The number of magnetic heads 6 disposed is the same as the number of principal surfaces of the platters 1, i.e., eight in FIG. 1. The magnetic heads 6 slightly float off the principal surfaces of the platters as the platters 1 start rotating. Deflection of the platter 1 can result in a crash of the magnetic head 6.

In an HDD, a plurality of thin platters are disposed in a small space for capacity increase. Because of such a dense disposition, slight deflection of a rotating platter makes a crash of the magnetic head more likely. Therefore, the Young's modulus of the material of the platters is desirably high. Moreover, the specific gravity of the material of the platters is desirably small to reduce a load on a small motor that rotates the plurality of platters. Along with advances in capacity increase, decrease in specific gravity as well as increase in Young's modulus become more and more important. Furthermore, in terms of improving the areal density, a magnetic recording layer compatible with energy-assisted magnetic recording typified by heat-assisted magnetic recording (HAMR) is desirably used. A high-temperature thermal treatment is needed to form a magnetic recording layer compatible with heat-assisted magnetic recording. In this case, heat resistance is required of a glass sheet serving as the substrate. As for properties of the glass sheet, the glass transition temperature (Tg) which is a measure of heat resistance is desirably regarded as important, as well as the Young's modulus and the specific gravity.

### [Components of Glass Composition Included in Glass Sheet]

Hereinafter, every percentage symbol (%) used to indicate a content of a glass component is "mol%" unless otherwise specified.

### (SiO₂)

SiO₂ is a component that forms a glass network and contributes to improvement of heat resistance. A SiO₂ content may be 50 to 70%. The SiO₂ content is preferably 52% or more, even 53% or more, or particularly 54% or more, and may be, in some cases, 56% or more, or even 57% or more. Too high a SiO₂ content can decrease the Young's modulus. Therefore, the SiO₂ content is preferably 69% or less, 67% or less, 65% or less, 62% or less, 61% or less, even 60% or less, or particularly 59% or less, and may be, in some cases, 58% or less, 57.8% or less, or even 57.5% or less.

### (Al₂O₃)

Al₂O₃ contributes to maintenance of the heat resistance, the water resistance, and the like of the glass composition, and is also a component that affects the devitrification temperature, the viscosity, and the like. An Al₂O₃ content may be 7.5 to 26%. The Al₂O₃ content is preferably 9% or more, even 10% or more, or particularly 11% or more, and may be, in some cases, 12% or more, or even 14% or more. Too high an Al₂O₃ content can cause a great increase in liquidus temperature, which is a disadvantage in manufacturing. Hence, the Al₂O₃ content is preferably 24% or less, or even 22% or less, and may be, in some cases, 20% or less, or even 19% or less.

In view of mass production, in particular, the devitrification temperature of the glass composition is preferably sufficiently low relative to the liquidus temperature. The Al₂O₃ content suitable for sufficiently decreasing the devitrification temperature relative to the liquidus temperature is 11 to 15%, even 11 to 14%, or particularly 11.5 to 13.5%. As described later, to sufficiently decrease the devitrification temperature relative to the liquidus temperature, an appropriate amount of Li₂O and/or B₂O₃ may be added. An Al₂O₃ content of 11 to 15% can also contribute to decreasing the specific gravity. The Al₂O₃ content suitable for sufficiently increasing a crack resistance load and/or the glass transition temperature (Tg) is 15 to 26%, even 16 to 22%, or particularly 17 to 21%.

### <(Al₂O₃)/(SiO₂+Al₂O₃)>

A molar ratio of Al₂O₃ to a sum of the SiO₂ content and the Al₂O₃ content is desirably set within the range of 0.15 to 0.35. This makes it easier to achieve a good balance between a high Young's modulus and a moderate liquidus temperature. The molar ratio Al₂O₃/(SiO₂+Al₂O₃) may be 0.16 or more, even 0.18 or more, in some cases, 0.20 or more, or 0.30 or less. In a composition including both B₂O₃ and Li₂O, the molar ratio Al₂O₃/(SiO₂+Al₂O₃) suitable for decreasing the specific gravity is 0.25 or less.

### (MgO)

MgO contributes to improvement of the Young's modulus, and is also a component that affects the devitrification temperature, the viscosity, and the like. A MgO content may be 15 to 30%. The MgO content is preferably 17% or more, even 18% or more, or particularly 20% or more, and may be, in some cases, 21% or more, or even 22% or more. Too high a MgO content can cause a great increase in liquidus temperature. Hence, the MgO content is preferably 29% or less, and may be, in some cases, 28% or less, or even 27% or less.

The MgO content suitable for sufficiently decreasing the devitrification temperature relative to the liquidus temperature is 18 to 30%, or even 20 to 28%.

The MgO content suitable for sufficiently increasing the crack resistance load is 17 to 30%, even 18 to 26%, or particularly 22 to 26%.

### (CaO)

CaO is an optional component that contributes to maintenance of the water resistance and the like and that affects the devitrification temperature, the viscosity, and the like. A CaO content may be 0 to 8%. Addition of an appropriate amount of CaO is preferable in terms of decreasing the liquidus temperature. Hence, CaO is preferably added (with a content of more than 0%), and the CaO content is preferably 0.1% or more, or even 0.12% or more, and may be, in some cases, 2% or more, or even 3% or more. However, too much CaO can decrease the Young's modulus. Hence, the CaO content is preferably 7% or less, even 5% or less, particularly 4.5% or less, or, in some cases, 4% or less. The CaO content particularly suitable for improving the Young's modulus and the crack resistance load is less than 1%.

### <Sum of MgO and CaO>

A sum of the MgO content and the CaO content may be 18 to 35%, preferably 20 to 30%.

### <(Al₂O₃)/(MgO+CaO)>

A molar ratio of Al₂O₃ to the sum of the MgO content and the CaO content is desirably set to 1.2 or less, or even less than 1. This makes it easier to achieve a good balance between a high Young's modulus and a moderate liquidus temperature. The molar ratio Al₂O₃/(MgO+CaO) is preferably 0.3 to 0.9, or particularly 0.35 to 0.85, and may be, in some cases, 0.4 to 0.7, or even 0.4 to 0.6. The molar ratio Al₂O₃/(MgO+CaO) may be 0.3 to 0.5. It should be noted that the molar ratio Al₂O₃/(MgO+CaO) particularly suitable for improving the crack resistance load is 0.5 to 1.0, 0.7 or more and less than 1, even 0.7 to 0.9, or particularly 0.8 to 0.9.

### (B₂O₃)

B₂O₃ is an optional component that forms a glass network and that affects the properties, such as the devitrification temperature and the viscosity. A B₂O₃ content may be 0 to 3%. Addition of a minute amount of B₂O₃ can contribute to decreasing the devitrification temperature. A minute amount of B₂O₃ can also contribute to decreasing the specific gravity. Hence, B₂O₃ is preferably added (with a content of more than 0%), and the B₂O₃ content is preferably 0.1% or more, 0.2% or more, or particularly 0.3% or more, and may be, in some cases, 0.5% or more, or even 0.7% or more. However, too much B₂O₃ can decrease the Young's modulus. The B₂O₃ content is preferably 2.5% or less, even 2% or less, or particularly 1.8% or less, and may be, in some cases, 1.6% or less, or even 1.5% or less. A preferable range of the B₂O₃ content is, for example, 0.1 to 1.6%.

### (Li₂O)

Li₂O is a component that modifies a glass network, and is an optional component that affects the properties, such as the liquidus temperature, the devitrification temperature, and the viscosity. A Li₂O content may be 0 to 3%. Addition of Li₂O within this range is effective in decreasing the devitrification temperature. Hence, Li₂O is preferably added (with a content of more than 0%), and the Li₂O content is preferably 0.1% or more, 0.2% or more, or particularly 0.3% or more, and may be, in some cases, 0.5% or more, or even 0.7% or more. Too high a Li₂O content can decrease the Young's modulus. Hence, the Li₂O content is preferably 2.5% or less, even 2% or less, or particularly 1.8% or less, and may be, in some cases, 1.6% or less, or even 1.5% or less. A preferable range of the Li₂O content is, for example, 0.2 to 2.5% and is higher than the Na₂O content.

### <Coexistence of B₂O₃ and Li₂O>

Coexistence of B₂O₃ and Li₂O (B₂O₃ > 0%, Li₂O > 0%) makes it easier to appropriately adjust the liquidus temperature and the devitrification temperature of glass. Coexistence of B₂O₃ and Li₂O is also advantageous in terms of decreasing the specific gravity of glass. A sum of the B₂O₃ content and the Li₂O content is preferably 0.1 % or more, even more than 0.5%, or particularly 0.7% or more, and may be, in some cases, 1% or more. Moreover, the sum is preferably 5.5% or less, even 5% or less, or particularly 4%, and may be, in some cases, 3.5% or less. The B₂O₃ content and the Li₂O content may each be 0.1 to 4%, even 0.2 to 3%, or particularly 0.2 to 2.5%. In terms of decreasing the specific gravity, the B₂O₃ content and the Li₂O content may each be 0.1 to 1.3%.

Adding B₂O₃ and Li₂O at an appropriate ratio is advantageous in terms of improving the properties. A molar ratio represented by B₂O₃/Li₂O is suitably 0.2 to 5, even 0.4 to 2.5, particularly 0.5 to 2, or, in some cases, 0.8 to 1.25.

### (Na₂O)

Similarly to Li₂O, Na₂O is an optional component that affects the properties, such as the liquidus temperature, the devitrification temperature, and the viscosity. However, since Na₂O has a greater decreasing effect on Young's modulus than Li₂O, a Na₂O content may be 0 to 0.2%. It is basically desirable that the glass composition be free of Na₂O; however, for refining of a glass melt, Na₂O is preferably added in an amount of 0.2% or less, even 0.15% or less, or, for example, more than 0% and less than 0.1%.

### <Sum of Above-Described Components>

A sum of the contents of the above-described seven components (SiO₂, Al₂O₃, MgO, CaO, B₂O₃, Li₂O, Na₂O) is preferably 95% or more, even 97% or more, particularly 98% or more, or especially 99% or more, and may be, in some cases, 99.5%, even more than 99.9%, or 100%. An embodiment where the sum of the contents of the seven components is 100% is, in other words, an embodiment where the glass composition consists of SiO₂, Al₂O₃, MgO, CaO, B₂O₃, Li₂O, and Na₂O.

### <Additional Components>

Examples of additional components other than the above-described seven components are as follows. It should be noted that the additional components are not limited to these, and the contents of the additional components are examples.

### (K₂O)

Similarly to Li₂O, K₂O is also an optional component that affects the properties, such as the liquidus temperature, the devitrification temperature and the viscosity, and has a promoting effect on refining a glass melt. However, since K₂O has a greater decreasing effect on Young's modulus than Na₂O, a K₂O content is preferably set within the range of 0 to 0.1%, even 0 to 0.05%, or particularly 0 to 0.03%.

### (SrO)

SrO is also an optional component that affects the properties, such as the liquidus temperature, the devitrification temperature, and the viscosity. However, addition of SrO can also decrease the Young's modulus. Moreover, too much SrO can impair homogenization of a glass melt. Therefore, a SrO content is preferably set within the range of 0 to 5%. The SrO content is suitably 3% or less, even 1% or less, particularly 0.5% or less, or especially 0.1% or less. The SrO content is preferably set such that a sum of the SrO content and the CaO content is 8% or less, even 6% or less, particularly 5% or less, or, in some cases, 4% or less.

### (BaO)

BaO is also an optional component that affects the properties, such as the liquidus temperature, the devitrification temperature, and the viscosity. However, addition of BaO can significantly decrease the Young's modulus. Additionally, BaO is a component that is environmentally unfriendly and imposes a heavy work burden. Therefore, the glass composition is preferably substantially free of BaO.

### (Transition Metal Oxide, Etc.)

An oxide of a transition element (in group 3 to group 11 in the periodic table), called a transition metal oxide, may also be an additional component. Examples of the transition metal oxide include TiO₂, ZrO₂, Fe₂O₃, Y₂O₃, La₂O₃, and CeO₂. ZnO which is an oxide of a group 12 element may also be an additional component. It is basically desirable that these oxides be excluded, but these oxides are sometimes inevitably introduced as impurities derived from a raw material or a production apparatus. Some of the oxides in a minor amount sometimes exhibit their effects as, for example, refining agents when added. The total content of the oxides of the group 3 to group 12 elements is preferably 3% or less, more preferably 1% or less, and particularly preferably 0.5% or less, and may be, if necessary, limited to 0.1% or less. The content of each transition metal oxide is preferably 0.5% or less, particularly preferably 0.3% or less, and more particularly preferably 0.1% or less.

A sum of the TiO₂ content and the Y₂O₃ content may be 3% or less, or even 2% or less. The TiO₂ content and the Y₂O₃ content may each be 1% or less, or 0.7% or less. It can be advantageous to reduce the contents of these components in terms of manufacturing cost. Reducing the contents of these components is also advantageous in terms of decreasing the specific gravity.

The content of an oxide of a transition element having different valences in the glass composition is herein determined by assuming that the metal in the oxide has the maximum oxidation number. For example, iron oxide commonly exists as Fe₂O₃ or FeO in the glass composition. Thus, an iron oxide existing as FeO is assumed to be Fe₂O₃, and the content thereof is combined with the content of an iron oxide existing as Fe₂O₃ to determine the content of iron oxide (which may commonly be described as "T-Fe₂O₃").

### (Other Components)

Examples of additional components other than the above include SnO₂, Sb₂O₃, Sb₂O₅, SOs, Cl, and F. These components can function as refining agents. Examples of other additional components include Ga₂O₃ and P₂O₅. Each of the contents of the components from SnO₂ to P₂O₅ exemplified in this paragraph is also preferably 0.5% or less, particularly 0.3% or less, or especially 0.1% or less.

### <Examples of Preferred Embodiments of Glass Composition>

In one embodiment of the present invention, the glass composition is substantially free of oxides of rare-earth elements. In another embodiment of the present invention, the glass composition includes 0 to 0.5% T-Fe₂O₃, and is substantially free of oxides of divalent metals excluding MgO, CaO, and FeO. In still another embodiment of the present invention, the glass composition is substantially free of alkali metal oxides excluding Li₂O and Na₂O. In yet another embodiment of the present invention, the glass composition is substantially free of TiO₂ and ZrO₂. In a further embodiment of the present invention, the nitride content is 10 wt% or less in the glass composition, and the glass composition is preferably substantially free of nitrides. In an additional embodiment of the present invention, the glass composition is not a glass-ceramic. In other words, a diffraction peak derived from a crystal is not confirmed by X-ray diffraction.

In one embodiment of the present invention, a sum of the contents of the above seven components (SiO₂, Al₂O₃, MgO, CaO, B₂O₃, Li₂O, and Na₂O) and additional five components (K₂O, SrO, TiO₂, ZrO₂, and T-Fe₂O₃) in the glass composition is 99% or more, even 99.5% or more, particularly 99.9% or more, especially 99.95% or more, or, in some cases, 100%. In this embodiment, the contents of the additional five components are as follows: K₂O, 0 to 0.05%; SrO, 0 to 5%; TiO₂, 0 to 0.1%; ZrO₂, 0 to 0.1%; and T-Fe₂O₃, 0 to 0.5%.

In one embodiment of the present invention, the sum of the contents of the above seven components (SiO₂, Al₂O₃, MgO, CaO, B₂O₃, Li₂O, and Na₂O) and additional three components (K₂O, TiO₂, and T-Fe₂O₃) in the glass composition is 99% or more, even 99.5% or more, particularly 99.9% or more, especially 99.95% or more, or, in some cases, 100%. In this embodiment, the contents of the additional three components are as follows: K₂O, 0 to 0.05%; TiO₂, 0 to 0.1%; T-Fe₂O₃, 0 to 0.5%.

In one embodiment of the present invention, the glass composition includes:

| | |
|---|---|
| SiO₂ | 50 to 70%; |
| Al₂O₃ | 7.5 to 26%; |
| MgO | 15 to 30%; |
| CaO | 0 to 8%; |
| B₂O₃ | 0 to 3%; |
| Li₂O | 0 to 3%; and |
| Na₂O | 0 to 0.2%, wherein |

the sum of the MgO content and the CaO content is 18 to 35 mol%, and
the molar ratio calculated from Al₂O₃/(MgO+CaO) is 1.2 or less.

In one embodiment of the present invention, the glass composition includes:

| | |
|---|---|
| SiO₂ | 53 to 60%; |
| Al₂O₃ | 11 to 15%; |
| MgO | 18 to 30%; |
| CaO | 0 to 5%; |
| B₂O₃ | 0.2 to 1.5%; |
| Li₂O | 0.5 to 2.5%; and |
| Na₂O | 0 to 0.2%, wherein |

the molar ratio calculated from Al₂O₃/(MgO+CaO) is 0.3 to 0.5.

The sum of the MgO content and the CaO content in this glass composition is 18 to 35%. This embodiment is particularly suitable for adjusting the devitrification temperature in a preferable range in relation to the liquidus temperature and the like.

In one embodiment of the present invention, the glass composition includes:

| | |
|---|---|
| SiO₂ | 53 to 60%; |
| Al₂O₃ | 15 to 26%; |
| MgO | 17 to 30%; |
| CaO | 0 to 5%; |
| B₂O₃ | 0.2 to 3%; |
| Li₂O | 0.2 to 1.5%; and |
| Na₂O | 0 to 0.2%, wherein |

the molar ratio calculated from Al₂O₃/(MgO+CaO) is 0.5 to 1.0, preferably 0.7 to 0.9. The sum of the MgO content and the CaO content in this glass composition is 18 to 35%. In this embodiment, the CaO content may be 0 to 4.5%. This embodiment is particularly suitable for improving the crack resistance load.

In one embodiment of the present invention, the glass composition includes:

| | |
|---|---|
| SiO₂ | 56 to 70%; |
| Al₂O₃ | 15 to 26%; |
| MgO | 15 to 26%; |
| CaO | 0 to 3%; |
| B₂O₃ | 0 to 3%; |
| Li₂O | 0 to 3%; and |
| Na₂O | 0 to 0.2%, wherein |

the molar ratio calculated from Al₂O₃/(MgO+CaO) is 0.5 to 1.2. This embodiment is particularly suitable for increasing Tg, i.e., improving the heat resistance.

### [Properties of Glass Sheet]

In an information recording device, such as an HDD, reduction of deflection of an information recording medium is required. This is because, for example, in an HDD, when a rotating platter deflects, a magnetic head can come into contact with the platter and crash, as described above. A high rigidity of the glass sheet forming the substrate of a platter, specifically, a high Young's modulus, is desired so as to reduce deflection. In addition, the glass sheet forming the substrate of a platter is desired to have a low specific gravity. Weight reduction of a platter by decreasing the specific gravity of the glass sheet can contribute to reducing power consumption by an HDD. Increase in Young's modulus and decrease in specific gravity of the glass sheet are particularly important for information recording devices having increased capacities and typified by an HDD including a plurality of platters. As described above, in relation with a magnetic recording layer compatible with heat-assisted magnetic recording, increase in Tg of the glass sheet is also important.

### (Specific Gravity)

In one embodiment of the present invention, the glass sheet has a specific gravity of 2.8 or less, preferably 2.7 or less, more preferably 2.65 or less, even more preferably 2.64 or less, or particularly preferably 2.63 or less. The glass sheet having such a small specific gravity is particularly suitable for an information recording medium. The lower limit of the specific gravity may be, but not particularly limited to, 2.5 or more.

### (Young's modulus)

In one embodiment of the present invention, the glass sheet has a Young's modulus of 94 GPa or more, 95 GPa or more, 97 GPa or more, 98 GPa or more, even 100 GPa or more, preferably 101 GPa or more, even more preferably 103 GPa or more, or, in some cases, 104 GPa or more. The upper limit of the Young's modulus may be, but not particularly limited to, 110 GPa or less, even 107 GPa or less, or, in some cases, 105 GPa or less. The method for measuring the Young's modulus is described in EXAMPLES. The glass sheet having a high Young's modulus is suitable for an information recording medium.

### (Specific Elastic Modulus)

The specific elastic modulus can be determined by dividing the Young's modulus by the specific gravity. The glass sheet having a high specific elastic modulus is particularly suitable for an information recording medium. This is because it is desirable that when an information recording medium is rotated at high speed, a load on a drive unit, such as a motor, be small and deflection of the information recording medium be slight. In one embodiment of the present invention, the glass sheet has a specific elastic modulus of 36 MNm/kg or more, 36.5 MNm/kg or more, preferably 37 MNm/kg or more, even more preferably 38 MNm/kg or more, or particularly preferably 39 MNm/kg or more.

### (Crack Resistance Load)

In one embodiment of the present invention, the glass sheet has a crack resistance load of 300 g or more, preferably 400 g or more, more preferably 500 g or more. Surprisingly, the glass sheet provided according to one embodiment of the present invention can have a particularly high crack resistance load, such as 900 g or more, even 1000 g or more, or particularly 1200 g or more. The upper limit of the crack resistance load is not limited to a particular value, and may be 2000 g or less. The method for measuring the crack resistance load is described in EXAMPLES. The glass sheet having a high crack resistance load is suitable for an information recording medium. In another embodiment of the present invention, the glass sheet has a crack resistance load of 300 to 550 g and a devitrification temperature TL of 1250 to 1350°C.

### (High-Temperature Viscosity)

In one embodiment of the present invention, a temperature T2 (a temperature at which the logarithm (logη) of the liquid viscosity η (unit: dPa·s) of a melt of the glass sheet is two; liquidus temperature) of the glass sheet can be 1490°C or lower, 1480°C or lower, even 1470°C or lower, or, in some cases, 1460°C or lower. A low T2 is suitable for mass production of information recording media. Likewise, a temperature T2.5 thereof can be 1400°C or lower, 1390°C or lower, even 1380°C or lower, or, in some cases, 1370°C or lower. A temperature T3 thereof can be 1310°C or lower, 1300°C or lower, even 1290°C or lower, or, in some cases, 1280°C or lower.

### (Devitrification Temperature)

In one embodiment of the present invention, the glass sheet has a devitrification temperature TL of 1450°C or lower, preferably 1400°C or lower, more preferably 1380°C or lower, or particularly preferably 1350°C or lower. A glass sheet having a high devitrification temperature TL is likely to precipitate crystals. A crystal precipitated on a surface of an information recording medium, such as a platter, can impair the smoothness of the surface of the medium. A low devitrification temperature is important for the glass sheet for an information recording medium.

### (Relationship between High-Temperature Viscosity and Devitrification Temperature)

In one embodiment of the present invention, the glass sheet has a value (ΔT) of 20°C or higher, preferably 30°C or higher, more preferably 50°C or higher, or particularly preferably 100°C or higher, the value (ΔT) being determined by subtracting the devitrification temperature TL of the glass sheet from the liquidus temperature T2.

### (Glass Transition Temperature)

In one embodiment of the present invention, the glass sheet has a glass transition temperature (glass-transition point) Tg of 700°C or higher, more preferably 725°C or higher, even more preferably 750°C or higher, or particularly preferably 800°C or higher. The glass composition having a high Tg is particularly suitable for an information recording medium; as described above, a high-temperature treatment is sometimes needed in a step of forming a recording layer, and, in such cases, heat resistance is required of an information recording medium. The upper limit of the glass transition temperature Tg is, for example, but not particularly limited to, 850°C.

Methods for measuring the liquid viscosity η, the devitrification temperature TL, and the glass transition temperature Tg are described in EXAMPLES.

### [Information Recording Medium]

The glass sheet described above is suitable for an information recording medium. The glass sheet having a high Young's modulus that makes deflection less likely, a low specific gravity that reduces a load on a motor, and a high Tg that represents high heat resistance is particularly suitable for an information recording medium. The glass sheet may have a disk shape. The disk-shaped glass sheet may have a hole at the center. The outer diameter of the glass sheet may be 3.5 inches or less, 2.5 inches or less, or even 1.8 inches or less. The thickness of the glass sheet may be, for example, 1 mm or less, 0.8 mm or less, 0.7 mm or less, 0.635 mm or less, or even 0.5 mm or less.

The glass sheet may be formed of a chemically strengthened glass. Chemical strengthening is, as is commonly known, a treatment in which an alkali ion included in glass is substituted by another alkali ion having a larger ionic radius, such as substitution of a lithium ion by a sodium ion or a sodium ion by a potassium ion, to introduce a compressive stress to a surface of the glass. The chemical strengthening of the glass sheet is commonly performed by bringing the glass sheet into contact with a molten salt including an alkali ion. Examples of the molten salt can include potassium nitrate and a salt mixture of potassium nitrate and sodium nitrate. When a molten salt consisting of potassium nitrate is used, an appropriate temperature of the molten salt is approximately 460°C to approximately 500°C in view of thermal decomposition of the potassium nitrate and the heat resistance of the glass. An appropriate time during which the glass and the molten salt are kept in contact with each other is, for example, 4 hours to 12 hours.

A surface roughness Ra of the glass sheet of the present embodiment may be 0.3 nm or less, 0.2 nm or less, or even 0.1 nm or less. Strictly speaking, the surface roughness Ra is an arithmetic average roughness specified in Japanese Industrial Standards (JIS) B 0601-2001. At least one, preferably both, of the principal surfaces of the glass sheet is required to have such a low surface roughness as described above. The glass sheet having a high surface flatness is suitable for an information recording medium.

The glass sheet of the present embodiment can have a low devitrification temperature TL and/or a large ΔT, as described above. Hence, the glass sheet of the present embodiment is suitable for reducing the surface roughness by polishing. It is difficult for a glass sheet in which devitrification occurred to have the above-described flatness even when polished with high precision because that glass sheet contains crystal grains. Incidentally, reduction in surface roughness as described above can be achieved, for example, by precise polishing using an abrasive including cerium oxide.

The method for manufacturing the glass sheet of the present embodiment is not limited to a particular one. A method with a higher cooling rate of a glass melt than the float process, such as the press molding method, the overflow downdraw method, or the rollout method, is suitable. This is because manufacturing by the float process involves an extremely low cooling rate, which makes devitrification likely to occur. For a glass sheet obtained by the float process, namely, float glass, diffusion of tin in a bottom surface, which was in contact with molten tin in a float bath, is observed. Since tin does not diffuse in a top surface on the opposite side, a difference between tin oxide concentrations in the two principal surfaces of the float glass is observed. This concentration difference is commonly approximately 1 mass% or more. For the glass sheet of the present embodiment, the difference between the tin oxide (SnO₂) concentrations in a first principal surface and a second principal surface may be 0.5 mass% or less, or even 0.1 mass% or less. The tin oxide (SnO₂) concentration in each principal surface can be expressed by the highest SnO₂ concentration obtained by measuring the SnO₂ concentration near the principal surface, specifically, from the principal surface to a depth of 10 µm. This highest concentration can be measured by the method described in EXAMPLES.

### EXAMPLES

Hereinafter, the present invention will be described in more details with examples.

Glass raw materials were prepared according to each of the compositions shown in Tables 1 and 2, and were molten for four hours in an electric furnace maintained at 1500 to 1600°C. During the melting, stirring was performed several times with a quartz glass stirrer to ensure homogenization of the glass. After that, the molten glass was poured into a stainless steel frame to form a sheet of glass. The sheet of glass was held at a temperature 20 to 50°C above the glass transition temperature of the glass for two hours or longer, and was then slowly cooled by allowing it to cool to room temperature over approximately eight hours. The thus-obtained glass was subjected to grinding processing and polishing processing (cerium oxide polishing) to obtain a glass specimen.

### (Specific Gravity)

The specific gravity (density) was measured for a small piece of each glass specimen by Archimedes' method using water as an immersion liquid.

### (Young's Modulus)

The Young's modulus was measured according to the ultrasonic pulse method specified in Japanese Industrial Standards (JIS) R 1602-1995. Each test piece was a rectangular parallelepiped measuring 5 mm × 25 mm × 35 mm. The measurement was performed at room temperature in air. An apparatus used was Model 25DL Plus manufactured by Panametrics. In addition, the Young's modulus was divided by the specific gravity to obtain the specific elastic modulus.

### (Crack Resistance Load)

The crack resistance load was measured by a test in which a Vickers indenter was pressed against a mirror-polished surface of each glass specimen. An apparatus used was a Vickers hardness tester manufactured by Akashi Corporation. The glass specimen was processed into a sheet having parallel planes. The plane against which the indenter was to be pressed was mirror-polished using a suspension of a cerium oxide abrasive. The Vickers indenter was pressed against the mirror-polished plane for 15 seconds. Five minutes after removing the load, whether a crack initiated from a vertex of a square indentation on the surface of the glass specimen was examined. Whether a crack initiated or not was determined by observing it using a microscope incorporated in the Vickers hardness tester. The magnification of the microscope was 100 times. This examination was performed 10 times, and a crack initiation probability P was calculated by dividing the number of vertices from which a crack initiated by the total number, namely 40, of examined vertices. The above examination was repeated with different loads of 50 g, 100 g, 200 g, 300 g, 500 g, 1000 g, and 2000 g in this order to determine the crack initiation probability P at each load until P = 100% was reached. In this manner, two loads WH and WL adjacent to each other across P = 50% and crack initiation probabilities PH and PL (PH < 50% < PL) at these loads were obtained. Load and crack initiation probability were respectively represented on the horizontal axis and the vertical axis. A straight line through two points (WH,PH) and (WL,PL) was drawn, and a load at P = 50% was defined as the crack resistance load.

### (Devitrification Temperature TL)

Each glass specimen was crushed into particles. Glass particles that passed through a sieve having an aperture size of 2.380 mm and that were left on a sieve having an aperture size of 1.000 mm were collected. The glass particles were immersed in ethanol and subjected to ultrasonic cleaning, followed by drying in a constant-temperature chamber. The glass particles weighing 30 to 32 g were spread to an almost uniform thickness on a platinum boat measuring 12 mm in width, 200 mm in length, and 10 mm in depth as a measurement specimen. This platinum boat was held in an electric furnace (temperature gradient furnace) with a temperature gradient of 950 to 1550°C for two hours. The temperature of a portion having the highest temperature among portions where crystalline phases (devitrification) distributed in the measurement specimen were observed was evaluated as the liquidus temperature TL.

### (T2, T2.5, T3)

T2, T2.5, and T3 were determined for each glass specimen by measuring viscosities at temperature intervals of 25°C by a platinum ball-drawing method and calculating intermediate viscosities from the Fulcher equation.

### (Glass Transition Temperature Tg)

A columnar specimen having a diameter of 5 mm and a length of 18 mm was produced from each glass specimen, and was measured for a thermal expansion curve by heating at 5°C/min using a TMA apparatus. The glass transition temperature Tg was obtained from this curve.

### (SnO₂ concentration)

Divalent Sn and trivalent Sn that were present to a depth of 10 µm from each surface of each glass sheet were measured using an electron probe microanalyzer (EPMA; JXA 8600 manufactured by JEOL Ltd.) and a wavelength dispersive X-ray detector (WDX; accelerating voltage:15 kV, specimen current: 2.5 × 10⁻⁷ A, scan speed: 66 µm/min, dispersive crystal: PET) attached to the microanalyzer, and were converted to SnO₂. The measurement was performed for both principal surfaces of the glass sheet. The highest concentration to a depth of 10 µm was defined as the SnO₂ concentration in the principal surface.

Each obtained sample was measured for the above properties. Tables 1 and 2 show the results. As can be understood from Comparative Examples 3 and 4, the Young's modulus can be increased by adding TiO₂, Y₂O₃, etc. However, as can be understood from Examples 1 to 11, improvement in Young's modulus by MgO is advantageous in that it enables control of the specific gravity along with improvement in Young's modulus. The Young's moduli of Comparative Examples 1, 2, and 5 to 7 were less than 98 GPa. As for Comparative Examples 1 and 2, T2 is relatively high, and that is a slight disadvantage in mass production. Note that the Ra values measured using a scanning probe microscope (SPM; SPI3700 manufactured by SII NanoTechnology Inc.) were in the range of 0.01 nm to 0.30 nm for both surfaces in all Examples and all Comparative Examples. Additionally, the difference between the SnO₂ concentrations in the two principal surfaces of the glass sheet was 0.1 mass% or less in all Examples and all Comparative Examples.

**[Table 1]**

| Example No. | 1 | 2 | 3 | 4 | 5 | 6 | 7 | 8 | 9 | 10 | 11 |
|---|---|---|---|---|---|---|---|---|---|---|---|
| SiO₂ | 54.92 | 57.33 | 57.43 | 54.94 | 54.94 | 57.35 | 54.84 | 54.88 | 54.87 | 68.50 | 66.0 |
| ZrO₂ | | | | | | | | | | | |
| Al₂O₃ | 14.98 | 12.46 | 12.48 | 14.98 | 14.98 | 14.96 | 14.96 | 14.96 | 18.95 | 15.50 | 17.0 |
| B₂O₃ | | 1.00 | 1.00 | 1.00 | 1.00 | 1.00 | 1.20 | 0.50 | 1.50 | 0.00 | |
| MgO | 24.96 | 27.92 | 23.97 | 20.48 | 22.97 | 25.43 | 27.52 | 28.89 | 22.94 | 15.50 | 17.0 |
| CaO | 4.99 | 0.16 | 3.99 | 7.49 | 4.99 | 0.15 | 0.17 | 0.16 | 0.14 | 0.20 | |
| SrO | | | | | | | | | | | |
| BaO | | | | | | | | | | | |
| ZnO | | | | | | | | | | | |
| Li₂O | | 1.00 | 1.00 | 1.00 | 1.00 | 1.00 | 1.20 | 0.50 | 1.50 | 0.00 | |
| Na₂O | 0.08 | 0.05 | 0.2 | 0.05 | 0.05 | 0.05 | 0.05 | 0.05 | 0.05 | 0.20 | |
| K₂O | | 0.01 | | 0.01 | 0.01 | 0.01 | 0.01 | | 0.01 | 0.20 | |
| Fe₂O₃ | 0.05 | 0.06 | 0.02 | 0.04 | 0.05 | 0.05 | 0.05 | 0.05 | 0.04 | 0.00 | |
| TiO₂ | 0.01 | 0.01 | 0.01 | 0.01 | 0.01 | 0.01 | 0.01 | 0.01 | 0.01 | 0.00 | |
| Y₂O₃ | | | | | | | | | | | |
| La₂O₃ | | | | | | | | | | | |
| Sum | 100.0 | 100.0 | 100.1 | 100.0 | 100.0 | 100.0 | 100.0 | 100.0 | 100.0 | 100.1 | 100.0 |
| Al₂O₃/RO | 0.50 | 0.44 | 0.45 | 0.54 | 0.54 | 0.58 | 0.54 | 0.51 | 0.82 | 0.99 | 1.00 |
| Al₂O₃/(SiO₂+Al₂O₃) | 0.21 | 0.18 | 0.18 | 0.21 | 0.21 | 0.21 | 0.21 | 0.21 | 0.26 | 0.18 | 0.20 |
| Specific gravity | 2.65 | 2.60 | 2.61 | 2.61 | 2.62 | 2.60 | 2.62 | 2.63 | 2.65 | 2.50 | 2.52 |
| Young's modulus (GPa) | 102.7 | 101.8 | 100.0 | 100.9 | 102.2 | 101.9 | 101.8 | 104.3 | 103.2 | 95.0 | 97.2 |
| Specific elastic modulus (MNm/kg) | 38.7 | 39.2 | 38.3 | 38.7 | 39.0 | 39.3 | 38.9 | 39.7 | 39.0 | 38.0 | 38.6 |
| Crack resistance load (g) | 400 | 500 | 440 | 330 | 400 | 1000 | 400 | 600 | 1500 | | |
| Devitrification temperature TL | 1395 | 1335 | 1280 | 1318 | 1345 | 1400 | 1345 | 1375 | 1426 | 1456 | ~1450 |
| T3 (logη = 3) | 1270 | 1268 | 1259 | 1270 | 1270 | 1258 | 1270 | 1270 | 1284 | 1456 | 1415 |
| T2.5 (logη = 2.5) | 1340 | 1351 | 1357 | 1340 | 1340 | 1371 | 1340 | 1340 | 1359 | - | 1497 |
| T2 (logη = 2) | 1429 | 1458 | 1445 | 1430 | 1430 | 1462 | 1430 | 1430 | 1450 | - | 1616 |
| ΔT | 34 | 123 | 165 | 112 | 85 | 62 | 85 | 55 | 24 | - | > 166 |
| Tg | 771 | 720 | 726 | 721 | 730 | 754 | 759 | 790 | 772 | 818 | 802 |

| | | | | | | | | | | | |
|---|---|---|---|---|---|---|---|---|---|---|---|
| RO = (MgO+CaO); the contents of the components are shown in mol%; the units of TL to Tg are °C | | | | | | | | | | | |

**[Table 2]**

| Comparative Example No. | 1 | 2 | 3 | 4 | 5 | 6 | 7 |
|---|---|---|---|---|---|---|---|
| SiO₂ | 61.89 | 53.60 | 57.30 | 66.20 | 66.73 | 63.00 | 57.40 |
| ZrO₂ | | 3.00 | 1.80 | | | | |
| Al₂O₃ | 11.74 | 18.00 | 17.60 | 7.74 | 7.81 | 4.00 | 8.00 |
| B₂O₃ | 1.54 | 2.80 | | | | | |
| MgO | 23.49 | 4.30 | 8.30 | 9.72 | 8.99 | 3.60 | 4.50 |
| CaO | 0.13 | | | 1.01 | 1.02 | 6.20 | 5.00 |
| SrO | | | | | | | 5.00 |
| BaO | | 0.60 | | | | | |
| ZnO | | 1.50 | | | | | |
| Li₂O | | | | | | 11.00 | 8.70 |
| Na₂O | 1.07 | | | 15.33 | 15.45 | 12.00 | 9.40 |
| K₂O | 0.07 | | | | | 0.30 | |
| Fe₂O₃ | 0.08 | | | | | | |
| TiO₂ | 0.01 | 2.40 | 2.40 | | | | 3.00 |
| Y₂O₃ | | 9.80 | 6.30 | | | | |
| La₂O₃ | | 3.90 | 6.30 | | | | |
| Sum | 100.0 | 99.9 | 100.0 | 100.0 | 100.0 | 100.0 | 100.0 |
| Al₂O₃/RO | 0.50 | 4.19 | 2.12 | 0.72 | 0.78 | 0.41 | 0.84 |
| Al₂O₃/(SiO₂+Al₂O₃) | 0.16 | 0.25 | 0.23 | 0.10 | 0.10 | 0.06 | 0.12 |
| Specific gravity | 2.54 | 3.51 | 3.50 | 2.51 | 2.52 | 2.51 | 2.84 |
| Young's modulus (GPa) | 92.4 | 116.4 | 113.5 | 74.8 | 74.7 | | 92.0 |
| Specific elastic modulus (MNm/kg) | 36.4 | 33.2 | 32.4 | 29.8 | 29.6 | | 32.4 |
| Crack resistance load (g) | 550 | | | | | | |
| Devitrification temperature TL | 1308 | 1268 | 1195 | 995 | < 843 | | |
| T3 (logη = 3) | 1346 | 1208 | 1230 | | | | |
| T2.5 (logη = 2.5) | 1438 | 1258 | 1290 | | | | |
| T2 (logη = 2) | 1550 | 1337 | 1374 | | | | |
| ΔT | 242 | 69 | 179 | | | | |
| Tg | 765 | | | 604 | 600 | 425 | |

| | | | | | | | |
|---|---|---|---|---|---|---|---|
| RO = (MgO+CaO); the contents of the components are shown in mol%; the units of TL to Tg are °C | | | | | | | |

## Claims

1. A glass sheet for an information recording medium, the glass sheet having a Young's modulus of 94 GPa or more, a specific gravity of 2.8 or less, and a glass transition temperature of 700°C or higher.

2. The glass sheet according to claim 1, comprising 15 to 30 mol% MgO.

3. The glass sheet according to claim 1, having a glass transition temperature of 800°C or higher.

4. The glass sheet according to claim 1, having a Young's modulus of 100 GPa or more.

5. The glass sheet according to claim 1, having a value ΔT of 20°C or higher, the value ΔT being determined by subtracting a devitrification temperature from a liquidus temperature (T2).

6. The glass sheet according to claim 1, having a specific elastic modulus of 36 MNm/kg or more.

7. The glass sheet according to claim 1, having a specific gravity of 2.65 or less.

8. The glass sheet according to claim 1, having a thickness of 1 mm or less.

9. The glass sheet according to claim 1, wherein a difference between SnO₂ concentrations in a first principal surface and a second principal surface is 0.5 mass% or less.
